# EUROPÄISCHE PATENTANMELDUNG

(11) **EP 4 582 337 A1**
(43) Veröffentlichungstag der Anmeldung: **09.07.2025**
(21) Anmeldenummer: 24220401.4
(22) Anmeldetag: 17.12.2024
(51) Int. Cl.: B62M 6/45, B62M 6/55

(54) **VERFAHREN ZUM STEUERN EINES ANTRIEBSMOTORS EINES FAHRRADS**

(30) Priorität: 05.01.2024 DE 102024200107
(71) Anmelder: ZF Friedrichshafen AG, 88046 Friedrichshafen (DE)
(72) Erfinder: Freudenthaler, Gerhard, 88212 Ravensburg (DE); Rösch, Patrik, 88326 Aulendorf (DE); Oexle, Dennis, 41812 Erkelenz (DE)
(74) Vertreter: ZF Friedrichshafen AG

(57) **Zusammenfassung**

Die vorliegende Erfindung bezieht sich auf ein Verfahren zum Steuern eines Antriebsmotors eines Fahrrads. Der Antriebsmotor ist mittels eines Freilaufs mit einem Abtriebselement des Fahrrads mechanisch wirkverbindbar. Das Verfahren weist wenigstens die folgenden Schritte auf:
- Bestimmen (10) eines variablen Solldrehzahlgradienten für den Antriebsmotor; und
- Steuern (12) des Antriebsmotors in Abhängigkeit von dem bestimmten variablen Solldrehzahlgradienten, um eine Motordrehzahl (22) an eine Synchrondrehzahl (20) des Freilaufs anzunähern. Zudem bezieht sich die Erfindung auf eine Steuervorrichtung und ein Fahrrad.

## Beschreibung

### Technisches Gebiet

Die vorliegende Erfindung bezieht sich auf ein Verfahren zum Steuern eines Antriebsmotors eines Fahrrads. Zudem bezieht sich die Erfindung auf eine Steuervorrichtung und ein Fahrrad.

### Stand der Technik

Moderne Fahrräder weisen häufig einen Antriebsmotor auf, um einen Benutzer beim Antreiben des Fahrrads zu unterstützen. Bekannt sind beispielsweise als Pedelecs ausgebildete Fahrräder. Dabei erfolgt eine Unterstützung nur, wenn der Benutzer pedaliert. Wenn der Benutzer dagegen das Pedalieren stoppt, wird auch die Unterstützung durch den Antriebsmotor gestoppt. Damit eine Massenträgheit des Antriebsmotors dabei nicht zu einem unerwünschten Antreiben einer Tretkurbelwelle führt, ist beispielsweise eine Rotation einer Motorwelle und der Tretkurbelwelle durch einen Freilauf entkoppelbar.

Damit der Antriebsmotor beim Antreiben des Fahrrads unterstützen kann, muss der Antriebsmotor mit seiner Drehzahl an eine Drehzahl der Tretkurbelwelle angepasst werden. Ein solches Nachführen ist jedoch schwierig, da Benutzer von Fahrrädern häufig ungleichmäßig pedalieren und generell eine Trittgeschwindigkeit häufig wechselt. Beispielsweise kann die Drehgeschwindigkeit der Tretkurbelwelle selbst innerhalb einer einzigen Umdrehung stark schwanken.

Deshalb kann es bei einem Einspuren des Antriebsmotors auf die Drehzahl der Tretkurbelwelle, um den Freilauf zu schließen, zu unerwünschten Effekten kommen. Wenn eine Synchronisierung des Antriebsmotors mit der Trittgeschwindigkeit zu lange dauert, kann der Benutzer eine Leistungsfähigkeit des Antriebsmotors in Frage stellen. Zudem ist dann beispielsweise für einen Großteil eines Anfahrvorgangs ein Antreiben rein mit Muskelkraft erforderlich, was bei körperlich beeinträchtigen Personen oder schweren Lastenrädern eine Benutzung des Fahrrads trotz motorischer Unterstützung zu anstrengend machen kann. Wenn eine Synchronisierung des Antriebsmotors mit der Trittgeschwindigkeit zu schnell erfolgt, kann es zu einem schlagartigen Einspuren kommen. Dadurch können laute Geräusche verursacht werden und Bauteile eines Antriebsstrangs des Fahrrads übermäßig belastet werden. Zudem kann es dann zu einem für den Benutzer spürbaren und damit gegebenenfalls unangenehmen Ruck kommen.

Aufgabe der vorliegenden Erfindung ist es, eine verbesserte Steuerung bei einem Antriebsmotor von einem Fahrrad zu ermöglichen. Diese Aufgabe wird durch die Gegenstände der nebengeordneten Patentansprüche gelöst.

### Darstellung der Erfindung

Ein erster Aspekt betrifft ein Verfahren zum Steuern eines Antriebsmotors eines Fahrrads. Ein Fahrrad kann beispielsweise als Mountainbike, Stadtrad oder Lastenrad ausgebildet sein. Ein Fahrrad weist beispielsweise zwei Laufräder auf. Das Fahrrad kann mittels einer Tretkurbelwelle durch einen Benutzer antreibbar sein. Der Benutzer kann beispielsweise ein Fahrradfahrer sein. An der Tretkurbelwelle können an jedem axialen Ende ein Kurbelarm drehfest befestigt sein. An den Kurbelarmen kann jeweils ein Pedal drehbar befestigt sein. Der Benutzer kann so beispielsweise durch Pedalieren das Fahrrad antreiben. Der Antriebsmotor des Fahrrads kann als Elektromotor ausgebildet sein. Der Antriebsmotor kann beispielsweise in einem Tretlagerbereich angeordnet sein. Der Antriebsmotor kann eine Motorwelle aufweisen. Der Antriebsmotor kann dazu ausgebildet sein, den Benutzer beim Antreiben des Fahrrads zu unterstützen. Das Fahrrad kann als Pedelec ausgebildet sein.

Der Antriebsmotor ist mittels eines Freilaufs mit einem Abtriebselement des Fahrrads mechanisch wirkverbindbar. Das Abtriebselement kann beispielsweise als Ritzel oder Laufrad ausgebildet sein. Ein Freilauf kann eine Kupplung sein, welche selbsttätig zwischen einem Sperrzustand und einem Freigabezustand in Abhängigkeit von einer relativen Drehrichtung von zwei Freilaufelementen zueinander wechseln kann. Der Freilauf kann eine Kupplung sein, welche nur in eine Drehrichtung ein Drehmoment überträgt und in einer anderen Drehrichtung einen freien Lauf zulässt. In dem Freigabezustand können die beiden Freilaufelemente relativ zueinander rotieren. Die beiden Freilaufelemente können so entkoppelt sein und es wird beispielsweise kein Drehmoment über den Freilauf übertragen. In dem Sperrzustand sind die beiden Freilaufelemente drehfest miteinander verbunden. Die beiden Freilaufelemente können so gekoppelt sein und es kann beispielsweise ein Drehmoment über den Freilauf übertragen werden. Beispiele für einen Freilauf sind ein Sperrklinkenfreilauf und eine Schlingfederkupplung.

Der Antriebsmotor kann beispielsweise mittels des Freilaufs mit einer Tretkurbelwelle mechanisch wirkverbindbar sein. Über die Tretkurbelwelle kann der Antriebsmotor mit dem Abtriebselement mechanisch wirkverbindbar oder wirkverbunden sein. Der Antriebsmotor kann beispielsweise mittels des Freilaufs direkt mit dem Abtriebselement mechanisch wirkverbindbar sein. Eine mechanische Wirkverbindung kann eine rotatorische Kopplung von zwei Elementen sein, optional über weitere Drehelemente, wie Wellen und Zahnräder. Die Tretkurbelwelle kann mittels eines Freilaufs mit dem Abtriebselement des Fahrrads mechanisch wirkverbindbar sein. Dabei kann es sich um den gleichen Freilauf handeln, welcher dann sowohl den Antriebsmotor als auch die Tretkurbelwelle mit dem Abtriebselement verbindet. Es kann sich aber auch um einen weiteren Freilauf handeln.

Das Verfahren weist einen Schritt eines Bestimmens eines variablen Solldrehzahlgradienten für den Antriebsmotor auf. Ein Drehzahlgradient kann eine Änderungsrate einer Drehzahl sein. Der Drehzahlgradient des Antriebsmotors kann zu einer Beschleunigung durch den Antriebsmotor korrespondieren. Eine Solldrehzahl kann eine gewünschte Drehzahl beim Betrieb des Antriebsmotors sein. Ein Solldrehzahlgradient kann ein gewünschter Drehzahlgradient beim Betrieb des Antriebsmotors sein. Der Solldrehzahlgradient kann eine gewünschte Beschleunigung durch den Antriebsmotor sein, bevor der Freilauf greift und ein Drehmoment von dem Antriebsmotor an das Abtriebselement übertragbar ist. Ein variabler Solldrehzahlgradient kann ein Solldrehzahlgradient sein, welcher sich bei dem Annähern an eine Synchrondrehzahl ändert. Während eines Einspurens können für den variablen Solldrehzahlgradient wenigstens zwei Werte bestimmt werden. Beispielsweise wird für einen ersten Zeitraum ein erster Wert für den Solldrehzahlgradient und für einen zweiten Zeitraum ein zweiter Wert für Solldrehzahlgradient bestimmt.

Das Verfahren weist einen Schritt eines Steuerns des Antriebsmotors in Abhängigkeit von dem bestimmten variablen Solldrehzahlgradienten, um eine Motordrehzahl an eine Synchrondrehzahl des Freilaufs anzunähern. Beispielsweise wird der Antriebsmotor zunächst in Abhängigkeit von dem ersten Wert des Solldrehzahlgradienten und dann in Abhängigkeit von dem zweiten Wert des Solldrehzahlgradienten gesteuert. Die Motordrehzahl kann eine Drehzahl einer Motorwelle des Antriebsmotors sein. Die Synchrondrehzahl kann eine erforderliche Drehzahl sein, damit beide Elemente des Freilaufs mit der gleichen Winkelgeschwindigkeit rotieren. Die Synchrondrehzahl kann einer Solldrehzahl des Antriebsmotors entsprechen, bei welcher im derzeitigen Fahrzustand der Freilauf sperrt. Beispielsweise kann die Synchrondrehzahl der derzeitigen Drehzahl der Tretkurbelwelle unter Berücksichtigung einer Übersetzung zwischen der Motorwelle und dem Freilauf entsprechen. Beispielsweise kann eine Motordrehzahl oder ein Motordrehmoment in Abhängigkeit von dem bestimmten Solldrehzahlgradienten gesteuert werden. Beispielsweise kann dafür eine Stromversorgung des Antriebsmotors entsprechend durch einen Inverter eingestellt werden.

Dem Antriebsmotor wird also zum Einspuren mit dem Freilauf beispielsweise nicht eine feste Beschleunigung vorgegeben, sondern es kann eine Beschleunigung in Abhängigkeit von Zustandsgrößen bestimmt werden. Während des Einspurens kann sich eine Vorgabe für die Beschleunigung ändern. Dadurch kann ein komfortableres und alternativ oder zusätzlich schnelleres Synchronisieren des Antriebsmotors mit dem Freilauf und alternativ oder zusätzlich der Tretkurbelwelle erreicht werden. So kann beispielsweise zunächst stark mit dem Antriebsmotor beschleunigt werden, um die Motordrehzahl schnell anzupassen. Bei größerer Annäherung an eine Drehzahl, bei welcher der Freilauf greift und Drehmoment von dem Antriebsmotor an das Abtriebselement übertragen wird, kann die Beschleunigung verringert werden, um ein ruckartiges Einspuren zu vermeiden. Insgesamt kann so schnell eine Unterstützung durch den Antriebsmotor bereitgestellt werden und trotzdem starke Stöße in einem Antriebsstrang des Fahrrads vermieden werden.

Das Verfahren wird beispielsweise gestartet, wenn ein Benutzer die Tretkurbelwelle in Vorwärtsrichtung dreht, beispielsweise durch ein Pedalieren. Optional muss eine Mindestdrehzahl durch die Tretkurbelwelle und alternativ oder zusätzlich eine Mindestfahrgeschwindigkeit erreicht werden, bevor das Verfahren gestartet wird. Optional muss das Verfahren durch einen Benutzer freigegeben werden, beispielsweise indem ein Unterstützungsmodus aktiviert wird. Das Annähern gemäß dem Steuerverfahren kann bis zum Erreichen der Synchrondrehzahl oder kurz davor erfolgen. Vor oder bei Erreichen der Synchrondrehzahl kann das Verfahren beendet werden kann. Dann kann eine klassische Folgeregelung für die Steuerung des Antriebsmotors genutzt werden. Ein Abbruchkriterium für das Verfahren kann beispielsweise das Erreichen der Synchrondrehzahl sein oder eines Schwellwerts, welcher unterhalb der Synchrondrehzahl liegt. Dieser Schwellwert kann beispielsweise einen fest vorgegebenen Abstand zu der Synchrondrehzahl haben. Der Abstand des Schwellwerts zu der Synchrondrehzahl kann auch in Abhängigkeit von der Synchrondrehzahl vorgegeben werden. Beispielsweise kann bei 98% der Synchrondrehzahl das Verfahren bzw. die entsprechende Steuerung des Antriebsmotors beendet werden. Das Verfahren kann auch beendet werden, wenn der Sollgradient nicht mehr gehalten werden kann. Dies ist beispielsweise der Fall, wenn der Freilauf greift bzw. in seinen Sperrzustand wechselt. Entsprechend kann so erkannt werden, dass durch die Motordrehzahl die Synchrondrehzahl erreicht wurde. Auch eine Überschreitung eines anderen Schwellwerts durch ein Motordrehmoment oder durch einen induzierten Strom kann ein erfolgreiches Einspuren indizieren, wobei dann in Reaktion das Verfahren beendet werden kann. Ebenso kann beispielsweise auch sensorisch ein erfolgreiches Einspuren an dem Freilauf erkannt werden und in Reaktion die Steuerung des Antriebsmotors gemäß dem Verfahren abgebrochen werden.

In einer weiteren Ausführungsform des Verfahrens kann es vorgesehen sein, dass das Bestimmen des variablen Solldrehzahlgradienten in Abhängigkeit von einem Vergleich der Motordrehzahl mit der Synchrondrehzahl erfolgt. Ein Ergebnis des Vergleichs kann eine Differenz sein. Beispielsweise wird bei einer hohen Differenz zwischen der Synchrondrehzahl und der Motordrehzahl ein hoher Solldrehzahlgradient bestimmt. So kann beispielsweise anfänglich stark durch den Antriebsmotor beschleunigt werden, ohne dass es ein Risiko eines ruckartigen Einspurens gibt. Das Einspuren kann so besonders schnell sein. Bei einer hohen Differenz zwischen der Synchrondrehzahl und der Motordrehzahl wird beispielsweise ein kleiner Solldrehzahlgradient bestimmt. Dadurch kann sich an die Synchrondrehzahl mit geringer Beschleunigung am Ende des Einspurens angenähert werden. Dadurch kann ein ruckartiges Einspuren, wie dies bei einer Beschleunigung des Antriebsmotors mit festem Drehzahlgradient oft der Fall ist, vermieden werden.

Das Verfahren kann einen Schritt eines Bestimmens der Synchrondrehzahl aufweisen. Dafür kann beispielsweise eine Kadenz der Tretkurbelwelle erfasst werden. Die Synchrondrehzahl kann in Abhängigkeit von der Kadenz und optional einer Übersetzung zwischen dem Antriebsmotor und dem Freilauf bestimmt werden. Die Übersetzung kann fest sein oder beispielsweise durch einen gewählten Gang vorgegeben sein. Die Kadenz kann einer Trittfrequenz entsprechen. Die Kadenz kann eine Drehzahl der Tretkurbelwelle sein, mit welcher diese durch den Fahrer angetrieben wird.

In einer weiteren Ausführungsform des Verfahrens kann es vorgesehen sein, dass das Bestimmen des variablen Solldrehzahlgradienten in Abhängigkeit von wenigstens einer Betätigung einer Tretkurbelwelle des Fahrrads durch einen Benutzer erfolgt. Dadurch kann ein Fahrverhalten des Benutzers beim Einspuren des Antriebsmotors berücksichtigt werden. Beispielsweise kann bei einem starken Antreiben des Fahrrads durch den Benutzer mit einem größeren Drehzahlgradienten durch den Antriebsmotor beschleunigt werden als bei einem schwachen Antreiben des Fahrrads. Dadurch kann ein Fahrerwunsch auch beim Synchronisieren des Antriebsmotors berücksichtigt werden. So kann bei einer hohen Fahrdynamik durch den Benutzer die Unterstützung ausreichend schnell greifen. Dabei kann dann beispielsweise auch hingenommen werden, dass es zu einem stärkeren Rucken im Antriebsstrang kommt. Bei einer gemäßigteren Fahrweise kann dagegen ein Fahrkomfort und ein Schonen der Bauteile des Antriebsstrangs stärker priorisiert werden.

Beispielsweise kann die Betätigung der Tretkurbelwelle eine oder mehrere Betätigungskenngrößen aufweisen, wie eine Kadenz bzw. Drehzahl der Tretkurbelwelle. Es kann sich auch um Ableitungen bzw. Gradienten von Kenngrößen handeln, wie einem Drehzahlgradienten der Tretkurbelwelle. Dadurch kann auch eine Beschleunigung durch den Fahrer berücksichtigt werden und nochmals schneller eingespurt werden. Beispielsweise kann so auch sichergestellt werden, dass der variable Solldrehzahlgradient für den Antriebsmotor größer als ein Drehzahlgradient der Synchrondrehzahl ist. Der Drehzahlgradient der Synchrondrehzahl kann dabei zu dem Drehzahlgradienten der Tretkurbelwelle korrespondieren, beispielsweise unter Berücksichtigung jeweiliger Übersetzungen zwischen der Tretkurbelwelle und dem Freilauf und alternativ oder zusätzlich zwischen der Motorwelle und dem Freilauf. Die Betätigung der Tretkurbelwelle kann zu einem Fahrerwunsch und einer gewünschten Fahrweise korrespondieren. Das Verfahren kann einen Schritt eines Erfassens der Betätigung aufweisen, beispielsweise mittels eines Drehmomentsensors und alternativ oder zusätzlich eines Drehzahlsensors.

Die Bestimmung des variablen Solldrehzahlgradienten kann in Abhängigkeit von dem Vergleich der Motordrehzahl mit der Synchrondrehzahl und in Abhängigkeit von der Betätigung der Tretkurbelwelle erfolgen. Es kann sich ein Kennfeld für die Bestimmung des Solldrehzahlgradienten ergeben, bei welcher zwei Kenngrößen berücksichtigt werden.

In einer weiteren Ausführungsform des Verfahrens kann es vorgesehen sein, dass die Betätigung ein durch den Fahrer eingebrachtes Pedaliermoment aufweist. Das Pedaliermoment kann die einzige Kenngröße der Betätigung sein, welche zur Bestimmung des variablen Solldrehzahlgradienten berücksichtigt wird. Es können aber auch weitere Kenngrößen, wie ein Pedalierdrehzahlgradient und alternativ oder zusätzlich ein Pedaliermomentgradient, berücksichtigt werden. Durch die Berücksichtigung des Pedaliermoments kann eine Stärke des Antreibens durch den Benutzer berücksichtigt werden, um bei einer hohen Belastung des Fahrers schnell durch den Antriebsmotor zu unterstützen. Bei einem hohen Pedaliermoment wird beispielsweise ein höherer Solldrehzahlgradient als bei einem niedrigen Pedaliermoment bestimmt. Zudem kann so ein durch den Antriebsmotor bereitgestelltes Antriebsmoment bei dem Greifen des Freilaufs und der dann erfolgenden Drehmomentübertragung an das Abtriebselement an ein Fahrerdrehmoment angepasst werden. So kann eine Unstimmigkeit zwischen Unterstützungsmoment und Antriebsmoment nach erfolgtem Einspuren vermieden werden.

In einer weiteren Ausführungsform des Verfahrens kann es vorgesehen sein, dass das Steuern des Antriebsmotors in Abhängigkeit von dem variablen Solldrehzahlgradienten einen Vergleich eines Istdrehzahlgradienten des Antriebsmotors und dem variablen Solldrehzahlgradienten aufweist. Dadurch kann eine Regelung für den Solldrehzahlgradienten bereitgestellt werden. Damit kann der Antriebsmotor besonders präzise für ein Folgen des variablen Solldrehzahlgradienten gesteuert werden. Das Verfahren kann einen Schritt eines Bestimmens eines Istdrehzahlgradienten aufweisen. Der Istdrehzahlgradient kann ein derzeitiger Drehzahlgradient des Antriebsmotors sein. Das Verfahren kann einen Schritt eines Vergleichs des Istdrehzahlgradienten des Antriebsmotors mit dem variablen Solldrehzahlgradienten aufweisen. Ein Ergebnis des Vergleichs kann eine Differenz sein. Beispielsweise wird der Antriebsmotor in Abhängigkeit von der Differenz zwischen dem Istdrehzahlgradienten des Antriebsmotors und dem variablen Solldrehzahlgradienten gesteuert. Beispielsweise kann so ein Motordrehmoment oder eine Motordrehzahl in Abhängigkeit von dem Ergebnis des Vergleichs geregelt werden. Beispielsweise kann dann entsprechend ein Motorstrom geregelt werden und alternativ oder zusätzlich ein erforderliches Drehmoment oder eine erforderliche Drehzahl für den Motor vorgegeben werden. Die Bestimmung des Istdrehzahlgradienten kann durch ein sensorisches Erfassen erfolgen oder auch von einer Steuergröße oder Zustandsgröße des Antriebsmotors abgeleitet werden, wie beispielsweise einer Stromversorgung des Antriebsmotors.

In einer weiteren Ausführungsform des Verfahrens kann es vorgesehen sein, dass das Steuern des Antriebsmotors in Abhängigkeit von dem variablen Solldrehzahlgradienten ein Vorgeben eines Motordrehmoments in Abhängigkeit von dem variablen Solldrehzahlgradienten aufweist. Dies kann eine Vorsteuerung für den Antriebsmotor sein. Dieses Vorgeben kann unabhängig von einem Vergleich des Istdrehzahlgradienten des Antriebsmotors und dem variablen Solldrehzahlgradienten erfolgen. Beispielsweise kann der Antriebsmotor vorgesteuert werden. Beispielsweise kann dem Antriebsmotor ein Solldrehmoment in Abhängigkeit von dem derzeitigen Wert des variablen Solldrehzahlgradienten vorgegeben werden. Diese Vorgabe kann beispielsweise auf Basis einer Tabelle erfolgen. Die Vorgabe kann beispielsweise auch linear zu dem Solldrehzahlgradienten korrespondieren. Die Vorgabe kann unabhängig von einem tatsächlichen Istdrehzahlgradienten erfolgen. Beispielsweise kann die Vorgabe zu einer bestimmten Stromversorgung des Antriebsmotors korrespondieren. Dadurch kann eine besonders schnelle Steuerung ermöglicht werden. Zudem kann so eine besonders schnelle Annäherung an den derzeitigen Wert des variablen Solldrehzahlgradienten und alternativ oder zusätzlich an die Synchrondrehzahl ermöglicht werden. Je nach tatsächlich anliegender Last, beispielsweise aufgrund einer Zuladung, kann eine so tatsächlich erreichter Drehzahlgradient von der Vorgabe abweichen.

Die Vorsteuerung und die Regelung können auch kombiniert werden. Beispielsweise kann ein Drehmoment für den Antriebsmotor in Abhängigkeit von dem variablen Solldrehzahlgradienten vorgegeben werden. Beispielsweise kann das Drehmoment oder die Drehzahl linear mit dem variablen Solldrehzahlgradienten korrespondieren. Zusätzlich kann dieses Drehmoment mit einem weiteren Drehmoment, welches in Abhängigkeit von einem Vergleich des Istdrehzahlgradienten des Antriebsmotors und dem variablen Solldrehzahlgradienten bestimmt wird, kombiniert werden. Beispielsweise kann das weitere Drehmoment zu dem Drehmoment der Vorsteuerung addiert werden, wobei das weitere Drehmoment linear zu der Differenz aus Istdrehzahlgradient und variablen Solldrehzahlgradient korrespondieren kann. So kann zunächst eine sehr schnelle Annäherung an den Solldrehzahlgradient und alternativ oder zusätzlich an die Synchrondrehzahl erfolgen und dann ein endgültiges Einspuren sehr sanft erfolgen.

Das Steuern des Antriebsmotors kann eine reine Vorsteuerung sein. Zu dem derzeitigen bestimmten Wert des variablen Solldrehzahlgradienten kann beispielsweise eine Stromversorgung oder ein Motormoment korrespondieren, mit welchem der Antriebsmotor gesteuert wird. Dafür kann beispielsweise ein tabellarischer Zusammenhang hinterlegt sein. Eine solche Steuerung kann einfach und robust sein. Alternativ oder zusätzlich kann das Steuern des Antriebsmotors eine Drehzahlgradientenregelung aufweisen. Dabei wird der derzeitige bestimmte Wert des variablen Solldrehzahlgradienten mit einem derzeitigen Istdrehzahlgradienten verglichen. In Abhängigkeit davon wird das Motormoment bzw. die Stromversorgung des Antriebsmotors vorgegeben. Damit kann der gewünschte Solldrehzahlgradient präzise eingehalten werden. Bei der Kombination mit der Vorsteuerung kann der gewünschte Solldrehzahlgradient durch den Antriebsmotor besonders schnell erreicht werden. In einer weiteren Variante wird bei der Vorsteuerung noch eine Ableitung des Solldrehzahlgradienten berücksichtigt. Beispielsweise wird eine Änderungsrate des variablen Solldrehzahlgradienten bestimmt. Zu dem derzeitigen bestimmten Wert der Änderungsrate des variablen Solldrehzahlgradienten kann beispielsweise eine Stromversorgung oder ein Motormoment korrespondieren, mit welchem der Antriebsmotor gesteuert wird. Die verschiedenen Größen für die Stromversorgung oder das Motormoment können bei den verschiedenen Varianten beispielsweise additiv kombiniert werden.

Ein zweiter Aspekt betrifft eine Steuervorrichtung für einen Antriebsmotor eines Fahrrads. Der Antriebsmotor kann mittels eines Freilaufs mit einem Abtriebselement des Fahrrads mechanisch wirkverbindbar sein. Die Steuervorrichtung kann dazu ausgebildet sein, das Verfahren gemäß dem ersten Aspekt durchzuführen. Jeweilige weitere Merkmale, Ausführungsformen und Vorteile sind den Beschreibungen des ersten Aspekts zu entnehmen. Umgekehrt stellen auch Merkmale, Ausführungsformen und Vorteile des zweiten Aspekts Merkmale, Ausführungsformen und Vorteile des ersten Aspekts dar. Die Steuervorrichtung kann beispielsweise einen Mikroprozessor aufweisen. Die Steuervorrichtung kann als ein Inverter ausgebildet sein. Die Steuervorrichtung kann dazu ausgebildet sein, einen variablen Solldrehzahlgradienten für den Antriebsmotor zu bestimmen und den Antriebsmotor in Abhängigkeit von dem bestimmten Solldrehzahlgradienten zu steuern, um eine Motordrehzahl an eine Synchrondrehzahl des Freilaufs anzunähern. Die Steuervorrichtung kann dazu ausgebildet sein, Sensorsignale von Sensoren des Fahrrads zu empfangen. Die Steuervorrichtung kann dazu ausgebildet sein, eine Stromversorgung des Antriebsmotors zu steuern.

Ein weiterer Aspekt betrifft einen Antriebsstrang für ein Fahrrad mit einer Steuervorrichtung, einem Antriebsmotor und einem Abtriebselement. Die Steuervorrichtung kann als Steuervorrichtung gemäß dem zweiten Aspekt ausgebildet sein. Jeweilige weitere Merkmale, Ausführungsformen und Vorteile sind den Beschreibungen des zweiten Aspekts zu entnehmen. Umgekehrt stellen auch Merkmale, Ausführungsformen und Vorteile des weiteren Aspekts Merkmale, Ausführungsformen und Vorteile des zweiten Aspekts dar. Der Antriebsstrang kann eine Sensorvorrichtung aufweisen. Die Sensorvorrichtung kann dazu ausgebildet sein, zuvor beschriebene Zustandsgrößen zu erfassen. Beispielsweise kann die Sensorvorrichtung dazu ausgebildet sein, eine Drehzahl der Tretkurbelwelle zu erfassen. Dafür kann die Sensorvorrichtung einen Drehzahlsensor aufweisen.

Ein dritter Aspekt betrifft ein Fahrrad. Das Fahrrad weist einen Antriebsmotor, ein Abtriebselement und einen Freilauf auf. Der Antriebsmotor ist mittels des Freilaufs mit dem Abtriebselement des Fahrrads mechanisch wirkverbindbar. Zudem weist das Fahrrad eine Steuervorrichtung auf. Die Steuervorrichtung kann als Steuervorrichtung gemäß dem zweiten Aspekt ausgebildet sein. Jeweilige weitere Merkmale, Ausführungsformen und Vorteile sind den Beschreibungen des zweiten Aspekts zu entnehmen. Umgekehrt stellen auch Merkmale, Ausführungsformen und Vorteile des dritten Aspekts Merkmale, Ausführungsformen und Vorteile des zweiten Aspekts dar. Die Steuervorrichtung kann dazu ausgebildet sein, einen variablen Solldrehzahlgradienten für den Antriebsmotor zu bestimmen und den Antriebsmotor in Abhängigkeit von dem bestimmten variablen Solldrehzahlgradienten zu steuern, um eine Motordrehzahl an eine Synchrondrehzahl des Freilaufs anzunähern. Das Fahrrad kann auch den zuvor beschriebenen Antriebsstrang und alternativ oder zusätzlich die zuvor beschriebene Sensorvorrichtung aufweisen.

### Kurze Beschreibung der Figuren

Fig. 1 veranschaulicht schematisch ein Verfahren zum Steuern eines Antriebsmotors eines Fahrrads, um eine Motordrehzahl an eine Synchrondrehzahl eines Freilaufs anzunähern.
Fig. 2 veranschaulicht in einem Diagramm einen Verlauf der Synchrondrehzahl und der Motordrehzahl, wobei der Motor mit dem Verfahren gemäß Fig. 1 gesteuert wird.
Fig. 3 veranschaulicht in einem Diagramm ein Antriebsmoment durch den Benutzer und ein Motormoment für den in Fig. 2 veranschaulichten Verlauf der Motordrehzahl.
Fig. 4 veranschaulicht in einem Diagramm den zu in Fig. 2 veranschaulichten Verlauf der Motordrehzahl und der Synchrondrehzahl korrespondierenden Zustand des Freilaufs.

### Detaillierte Beschreibung von Ausführungsformen

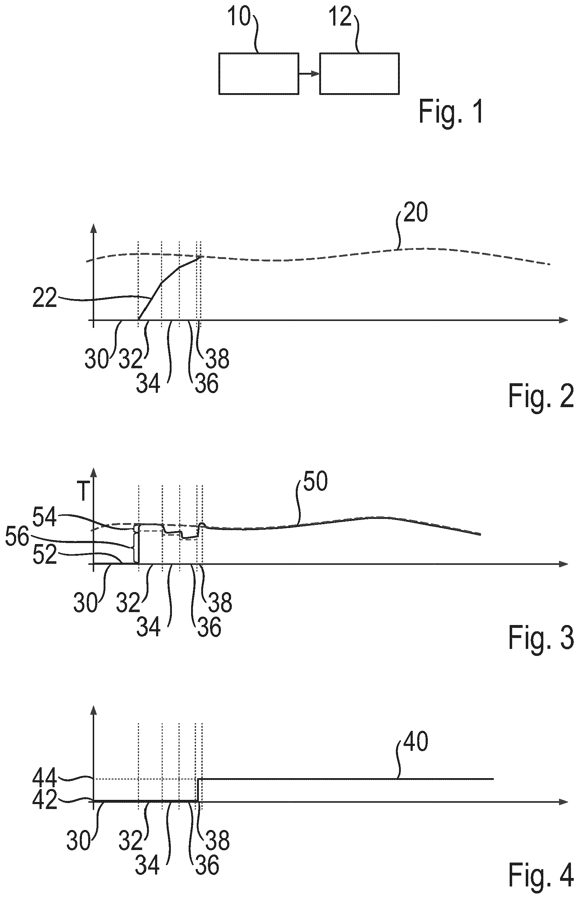

Fig. 1 veranschaulicht ein Verfahren zum Steuern eines Antriebsmotors eines Fahrrads. Das hier beschriebene Beispiel basiert auf einer Drehmomentsteuerung des Antriebsmotors, wobei in anderen Ausführungsformen das Verfahren auf einer Drehzahlsteuerung basiert. Der Antriebsmotor ist mittels eines Freilaufs mit einem Abtriebselement des Fahrrads mechanisch wirkverbindbar ist. An diesem Freilauf wird auch eine von einem Fahrradfahrer an einer Tretkurbelwelle des Fahrrads eingebrachte Antriebskraft an das Abtriebselement übertragen. In einer Ausführungsform ist eine Motorwelle des Antriebsmotors mittels des Freilaufs mit der Tretkurbelwelle mechanisch wirkverbindbar. Eine Drehzahl des Antriebsmotors muss deshalb zum Bereitstellen einer motorischen Antriebskraft und zum Unterstützen des Fahrradfahrers mit dem Antriebsmotor mit einer Drehzahl der Tretkurbelwelle synchronisiert werden. Dies wird auch als Einspuren bezeichnet, wodurch dann der Freilauf in seinen Sperrzustand wechselt.

Das Verfahren weist als einen ersten Schritt 10 ein Bestimmen eines variablen Solldrehzahlgradienten für den Antriebsmotor auf. Dieser Schritt erfolgt, wenn eine Drehbewegung der Tretkurbelwelle korrespondierend zu einer Vorwärtsfahrt erkannt wird. Das Bestimmen des variablen Solldrehzahlgradienten erfolgt in Abhängigkeit von einem Vergleich der Motordrehzahl mit einer Synchrondrehzahl. Je größer dabei eine Differenz der Motordrehzahl zu der Synchrondrehzahl ist, desto größer wird der variable Solldrehzahlgradient bestimmt. Die Synchrondrehzahl ist dabei die Drehzahl, welche die Motorwelle für das Einspuren aufweisen muss. Die Synchrondrehzahl ergibt sich aus der Drehzahl der Tretkurbelwelle multipliziert mit einer derzeitigen Übersetzung zwischen der Tretkurbelwelle und der Motorwelle. Das Bestimmen des variablen Solldrehzahlgradienten erfolgt in dem gezeigten Beispiel in diskreten Intervallen. In anderen Ausführungsformen erfolgt die Bestimmung des variablen Solldrehzahlgradienten kontinuierlich oder mit einer Frequenz einer die Bestimmung durchführenden Steuervorrichtung. In einem Schritt 12 erfolgt ein Steuern des Antriebsmotors in Abhängigkeit von dem bestimmten variablen Solldrehzahlgradienten, um eine Motordrehzahl an eine Synchrondrehzahl des Freilaufs anzunähern.

In Fig. 2 ist die Synchrondrehzahl mit einer Linie 20 über die Zeit aufgetragen. Weiterhin ist die Motordrehzahl mit einer Linie 22 über die Zeit aufgetragen. Eine Steigung der Linie 22 bzw. der Motordrehzahl entspricht somit dem Drehzahlgradienten des Antriebsmotors. In einem ersten Bereich 30 steht der Antriebsmotor still, da die Drehbewegung der Tretkurbelwelle noch nicht erkannt wurde. Ein erster Wert des variablen Solldrehzahlgradienten wird in dem ersten Bereich 30 deshalb als null bestimmt. In einem zweiten Bereich 32 wird ein zweiter Wert für den variablen Solldrehzahlgradienten bestimmt und der Antriebsmotor entsprechend gesteuert. Aufgrund der großen Differenz zwischen einer Istdrehzahl des Antriebsmotors und der Synchrondrehzahl wird ein hoher Wert für den Solldrehzahlgradienten für den Antriebsmotor vorgegeben, was anhand der starken Steigung der Linie 22 in dem zweiten Bereich 32 zu erkennen ist. Die Motordrehzahl nähert sich der Synchrondrehzahl so schnell an. Am Ende des zweiten Bereichs 32 wird ein dritter Wert für den variablen Solldrehzahlgradienten in einem sich an den zweiten Bereich 32 anschließenden dritten Bereich 34 bestimmt. Dieser dritte Wert des variablen Solldrehzahlgradienten ist kleiner, da ein Abstand der Motordrehzahl zu der Synchrondrehzahl nun geringer ist. Dies ist anhand der mittleren Steigung der Linie 22 in dem dritten Bereich 34 zu erkennen. So kann weiterhin eine schnelle Annäherung an die Synchrondrehzahl erfolgen, wobei ein Risiko für ein ruckartiges Einspuren, beispielsweise aufgrund eines Verlangsamens des Pedalierens durch den Fahrradfahrer, gering ist. Am Ende des dritten Bereichs 34 wird ein vierter Wert für den variablen Solldrehzahlgradienten in einem sich an den dritten Bereich 34 anschließenden vierten Bereich 36 bestimmt. Dieser vierte Wert des Solldrehzahlgradienten ist nochmal kleiner, da ein Abstand der Motordrehzahl zu der Synchrondrehzahl nun noch geringer ist. Dies ist anhand der geringen Steigung der Linie 22 in dem vierten Bereich 36 zu erkennen. So kann weiterhin eine sanfte Annäherung an die Synchrondrehzahl erfolgen, um ein ruckartiges Einspuren zuverlässig zu vermeiden.

In einem sich an den vierten Bereich 36 anschließenden fünften Bereich 38 ist die Drehzahl, bei der der Freilauf sperrt, durch den Antriebsmotor erreicht. In dem fünften Bereich 38 wird also die Synchrondrehzahl erreicht. In Fig. 4 ist mit einer Linie 40 ein Zustand des Freilaufs über die Zeit aufgetragen, wobei bei einem Wert 42 der Freilauf in seinem Freigabezustand ist und bei einem Wert 44 in seinem Sperrzustand. In den ersten vier Bereichen 30, 32, 34, 36 befindet sich der Freilauf in seinem Freigabezustand. In dem fünften Bereich 38 wechselt der Freilauf in seinen Sperrzustand. Das somit erfolgte Einspuren wird erkannt und das Verfahren gemäß Fig. 1 beendet. Der Antriebsmotor wird dann mit einer üblichen Folgeregelung gesteuert, um die Synchrondrehzahl trotz schwankender Kadenz der Tretkurbelwelle, welche in Fig. 2 anhand der gewellten Linie 20 zu erkennen ist, beizubehalten.

Alternativ oder zusätzlich zu der Bestimmung des variablen Solldrehzahlgradienten in Abhängigkeit von dem Vergleich der Motordrehzahl mit der Synchrondrehzahl wird in einer anderen Ausführungsform der variable Solldrehzahlgradient in Abhängigkeit von wenigstens einer Betätigung einer Tretkurbelwelle des Fahrrads durch einen Benutzer in Schritt 10 bestimmt werden. Dabei wird als Betätigung ein Pedaliermoment des Fahrradfahrers, welches an der Tretkurbelwelle eingebracht wird, erfasst. Bei einem höheren Pedaliermoment wird dann ein höherer Wert für den Solldrehzahlgradienten als bei einem niedrigeren Pedaliermoment für den Antriebsmotor vorgegeben.

Fig. 3 veranschaulicht die Drehmomentsteuerung des Antriebsmotors in Schritt 10. Mit einer Linie 50 ist ein durch den Fahrradfahrer angefordertes Drehmoment über der Zeit aufgetragen, welches sich aus der Synchrondrehzahl und alternativ oder zusätzlich dem Pedaliermoment ergibt. Mit einer Linie 52 ist ein durch den Antriebsmotor erzeugtes Drehmoment über der Zeit aufgetragen, welches zumindest in den ersten vier Bereichen 30, 32, 34, 36 einer Drehmomentvorgabe für den Antriebsmotor folgt. In dem ersten Bereich 30 wird ein Drehmoment von null für den Motor vorgegeben. In dem zweiten Bereich 32 wird ein höchstes Drehmoment vorgegeben, damit der Antriebsmotor den hohen Solldrehzahlgradienten in dem zweiten Bereich 32 und damit eine hohe Beschleunigung erreichen kann. In dem dritten Bereich 34 wird ein mittleres Drehmoment vorgegeben, damit der Antriebsmotor den mittleren Solldrehzahlgradienten in dem dritten Bereich 32 und damit eine mittlere Beschleunigung erreicht. In dem vierten Bereich 36 wird ein geringes Drehmoment vorgegeben, damit der Antriebsmotor den geringen Solldrehzahlgradienten in dem vierten Bereich 32 und damit eine niedrige Beschleunigung erreicht. In dem fünften Bereich 38 gibt es einen sprungartigen Anstieg des Motormoments. Dieser sprunghafte Anstieg wird nicht durch eine hohe Drehmomentvorgabe verursacht, sondern dadurch, dass der Freilauf in seinen Sperrzustand wechselt. Eine Beschleunigung des Antriebsmotors erfordert dann ein wesentlich höheres Drehmoment und auch ein Halten der Synchrondrehzahl erfordert ein höheres Drehmoment, da der Antriebsmotor nun aufgrund des geschlossenen Freilaufs das Fahrrad mit antreibt. Dieser sprunghafte Anstieg wird erfasst und dazu benutzt, um den Wechsel des Freilaufs in den Sperrzustand zu erkennen und die Steuerung des Antriebsmotors mit dem Verfahren gemäß Fig. 1 zu beenden.

In Fig. 3 ist zudem für den zweiten Bereich 32 veranschaulicht, dass sich die Drehmomentvorgabe für den Antriebsmotor aus zwei Komponenten zusammensetzt. Das Steuern des Antriebsmotors in Abhängigkeit von dem variablen Solldrehzahlgradienten weist einen Vergleich eines Istdrehzahlgradienten des Antriebsmotors und dem variablen Solldrehzahlgradienten auf. Das Ergebnis dieses Vergleichs ist eine Differenz. In Abhängigkeit von dieser Differenz wird ein Regelwert für die Drehmomentvorgabe berechnet. Dieser Anteil der Drehmomentvorgabe ist in Fig. 3 mit dem Bereich 54 veranschaulicht. Durch die Regelung kann der Antriebsmotor besonders präzise zum Einhalten des bestimmten variablen Solldrehzahlgradienten gesteuert werden. Das Steuern des Antriebsmotors in Abhängigkeit von dem variablen Solldrehzahlgradienten weist zudem ein Vorgeben eines Motordrehmoments in Abhängigkeit von dem variablen Solldrehzahlgradienten auf. In Abhängigkeit von dem variablen Solldrehzahlgradienten wird ein Vorsteuerwert für die Drehmomentvorgabe berechnet. In dem gezeigten Beispiel korrespondiert der Vorsteueranteil linear zu dem derzeitigen Wert des variablen Solldrehzahlgradienten. Bei einem hohen Solldrehzahlgradienten wird entsprechend ein hoher Vorsteuerwert berechnet und bei einem geringen Solldrehzahlgradienten ein geringer Vorsteuerwert. Dieser Anteil der Drehmomentvorgabe ist in Fig. 3 mit dem Bereich 56 veranschaulicht. Eine Gesamtdrehmomentvorgabe berechnet sich als Summe des Vorsteuerwerts und des Regelwerts. Durch den Vorsteuerwert kann der variable Solldrehzahlgradient besonders schnell durch den Antriebsmotor erreicht werden. Durch die Kombination von Regelung und Vorsteuerung kann der variable Solldrehzahlgradient besonders schnell durch den Antriebsmotor erreicht werden und dann präzise beibehalten werden. In einer anderen Ausführungsform weist die Drehmomentvorgabe nur den Regelwert auf. Der Antriebsmotor wird dann nur drehmomentgeregelt. In noch einer anderen Ausführungsform weist die Drehmomentvorgabe nur den Vorsteuerwert auf. Der Antriebsmotor wird dann nur drehmomentvorgesteuert.

### Bezugszeichen

- 10: erster Schritt
- 12: zweiter Schritt
- 20: Linie / Synchrondrehzahl
- 22: Linie / Motordrehzahl
- 30: erster Bereich
- 32: zweiter Bereich
- 34: dritter Bereich
- 36: vierter Bereich
- 38: fünfter Bereich
- 40: Linie / Zustand des Freilaufs
- 42: Wert / Freigabezustand
- 44: Wert / Sperrzustand
- 50: Linie / angefordertes Drehmoment
- 52: Linie / erzeugtes Motordrehmoment
- 54: Anteil Regelwert Drehmomentvorgabe
- 56: Anteil Vorsteuerwert Drehmomentvorgabe

## Patentansprüche

1. Verfahren zum Steuern eines Antriebsmotors eines Fahrrads, wobei der Antriebsmotor mittels eines Freilaufs mit einem Abtriebselement des Fahrrads mechanisch wirkverbindbar ist und wobei das Verfahren wenigstens die folgenden Schritte aufweist:
- Bestimmen (10) eines variablen Solldrehzahlgradienten für den Antriebsmotor; und
- Steuern (12) des Antriebsmotors in Abhängigkeit von dem bestimmten variablen Solldrehzahlgradienten, um eine Motordrehzahl (22) an eine Synchrondrehzahl (20) des Freilaufs anzunähern.

2. Verfahren nach Anspruch 1, **dadurch gekennzeichnet, dass** das Bestimmen (10) des variablen Solldrehzahlgradienten in Abhängigkeit von einem Vergleich der Motordrehzahl (22) mit der Synchrondrehzahl (20) erfolgt.

3. Verfahren nach Anspruch 1 oder 2, **dadurch gekennzeichnet, dass** das Bestimmen (10) des variablen Solldrehzahlgradienten in Abhängigkeit von wenigstens einer Betätigung einer Tretkurbelwelle des Fahrrads durch einen Benutzer erfolgt.

4. Verfahren nach Anspruch 3, **dadurch gekennzeichnet, dass** die Betätigung ein durch den Fahrer eingebrachtes Pedaliermoment aufweist.

5. Verfahren nach einem der vorhergehenden Ansprüche, **dadurch gekennzeichnet, dass** das Steuern (12) des Antriebsmotors in Abhängigkeit von dem variablen Solldrehzahlgradienten einen Vergleich (54) eines Istdrehzahlgradienten des Antriebsmotors und dem variablen Solldrehzahlgradienten aufweist.

6. Verfahren nach einem der vorhergehenden Ansprüche, **dadurch gekennzeichnet, dass** das Steuern (12) des Antriebsmotors in Abhängigkeit von dem variablen Solldrehzahlgradienten ein Vorgeben (56) eines Motordrehmoments (52) in Abhängigkeit von dem variablen Solldrehzahlgradienten aufweist.

7. Steuervorrichtung für einen Antriebsmotor eines Fahrrads, wobei der Antriebsmotor mittels eines Freilaufs mit einem Abtriebselement des Fahrrads mechanisch wirkverbindbar ist, wobei die Steuervorrichtung dazu ausgebildet ist, einen variablen Solldrehzahlgradienten für den Antriebsmotor zu bestimmen (10) und den Antriebsmotor in Abhängigkeit von dem bestimmten Solldrehzahlgradienten zu steuern (12), um eine Motordrehzahl (22) an eine Synchrondrehzahl (20) des Freilaufs anzunähern.

8. Fahrrad mit einem Antriebsmotor, einem Abtriebselement und einem Freilauf, wobei der Antriebsmotor mittels des Freilaufs mit dem Abtriebselement des Fahrrads mechanisch wirkverbindbar ist, und einer Steuervorrichtung, wobei die Steuervorrichtung dazu ausgebildet ist, einen variablen Solldrehzahlgradienten für den Antriebsmotor zu bestimmen (10) und den Antriebsmotor in Abhängigkeit von dem bestimmten Solldrehzahlgradienten zu steuern (12), um eine Motordrehzahl (22) an eine Synchrondrehzahl (20) des Freilaufs anzunähern.
